# EUROPÄISCHE PATENTSCHRIFT

(11) **EP 4 464 751 B1**
(45) Veröffentlichungstag und Bekanntmachung des Hinweises auf die Patenterteilung: **23.07.2025**
(21) Anmeldenummer: 23173518.4
(22) Anmeldetag: 16.05.2023
(51) Int. Cl.: C09D 5/00, C09D 7/00

(54) **REAKTIVE 2K-BESCHICHTUNGSZUSAMMENSETZUNG**
REACTIVE 2K COATING COMPOSITION
COMPOSITION DE REVÊTEMENT RÉACTIF 2K

(43) Veröffentlichungstag der Anmeldung: 20.11.2024
(73) Patentinhaber: STO SE & Co. KGaA, 79780 Stühlingen (DE)
(72) Erfinder: Hermann, Chris, 72108 Rottenburg (DE); Gerstmaier, Michael, 72379 Hechingen (DE); Finsterbusch, Boris, 72666 Neckartailfingen (DE); Figueroa, Rodrigo, 72119 Ammerbuch (DE); Domiter, Michael, 72414 Rangendingen (DE); Jooss, Ralf, 96450 Coburg (DE)
(74) Vertreter: Gottschalk, Matthias

(56) Entgegenhaltungen:
- WO-A1-02/062909
- CN-A- 103 865 365
- DE-A1- 102011 118 507
- FR-A1- 2 861 737
- US-A1- 2022 325 106

## Beschreibung

Die vorliegende Erfindung betrifft eine Zweikomponenten-Beschichtungszusammensetzung mit einer Harzkomponente (B), die als härtbaren Bestandteil mindestens ein Epoxid-Harz enthält, und einer Härterkomponente (A), die ein Aminhärter-System als Härtungsmittel für das Epoxid-Harz der Harzkomponente (B) enthält. Die Härterkomponente (A) der erfindungsgemäßen Zweikomponenten-Beschichtungszusammensetzung enthält weiterhin Wasser und mindestens ein Cellulose-Derivat. Das in der Härterkomponente (A) enthaltene Cellulose-Derivat weist eine Brookfield-Viskosität, bestimmt mittels Brookfield-Rotationsviskosimeter bei 25°C, 60 Upm, Spindel 2, an einer 5%igen Lösung in Wasser, von 2000 mPa·s oder weniger auf, und das Gewichtsverhältnis von Wasser zu dem Cellulose-Derivat in der Härterkomponente (A) beträgt 10:1 bis 20:1. Die vorliegende Erfindung betrifft ferner die Verwendung der Zweikomponenten-Beschichtungszusammensetzung als Bodenbeschichtung.

### Hintergrund der Erfindung

US 2022/325106 beschreibt ein Zweikomponenten-Beschichtungsmittel, enthaltend mindestens ein wasserdispergierbares Polymergemisch (A), das mindestens eine mercaptoreaktive Gruppe, ausgewählt aus der Gruppe der Epoxide und Michael-Akzeptoren, aufweist, sowie mindestens ein wasseremulgierbares Thiol (B), als Bildungskomponenten enthaltend (Ba) mindestens eine Verbindung mit mindestens zwei Mercaptogruppen, (Bb) mindestens eine Verbindung mit mindestens einer mercapto-reaktiven Gruppe und mindestens einer dispergierenden Gruppe, wobei die Bildungskomponente (Ba) einen Hansch-Parameter von mindestens 2,0 aufweist.

DE 10 2011 118507 betrifft gefärbte Zellulose, die fein verteilte Partikel enthält, die in Gegenwart eines reaktiven Bindemittels, das ein polyfunktionelles und wasserdispergierbares Epoxidharz-Amin-Bindemittel umfasst, mit einem Farbstoff beschichtet und/oder gefärbt sind, als duroplastische oder elastomere Schicht in physikalisch und chemisch haltbarer Form.

FR 2 861 737 beschreibt thixotrope Gele (I), die aus wässrigen Emulsionen oder Dispersionen oder wasserverdünnbaren Zusammensetzungen bestehen, enthaltend (a) mindestens ein Polymer oder Copolymer, (b) gegebenenfalls einen Härter mit gegenüber (a) reaktiven Funktionen und (c) mindestens ein in Wasser oder wässrigen Lösemitteln lösliches oder mit Wasser mischbares Verdickungsmittel, welches hydrophobe und hydrophile Funktionen enthält.

CN 103 865 365 betrifft ein Beschichtungssystem, bestehend aus einer wasserbasierten Grundschicht, einer wasserbasierten Zwischenschicht und einer lösemittelbasierten Deckschicht, wobei die wasserbasierte Grundschicht Polyesterharz enthält, die wasserbasierte Zwischenschicht Polyurethanharz enthält und die lösemittelbasierte Deckschicht Polyesterharz und Isocyanat enthält.

WO 02/062909 beschreibt härtbare Beschichtungszusammensetzungen, insbesondere für die Verwendung bei der Autoreparaturlackierung, wobei eine Bindemittelkomponente der Zweikomponenten-Beschichtungszusammensetzung ein Epoxidharz mit mindestens einer Acetessigester-Funktionalität und mindestens einer Epoxidgruppe sowie eine oder mehrere reaktive Komponenten mit mindestens zwei Acetessigester-Funktionalitäten umfasst. Zu den geeigneten reaktiven Komponenten gehören strukturierte reaktive Verdünnungsmittel, ein Acrylpolymer, ein Polyester oder eine Kombination davon. Eine Vernetzungskomponente der Beschichtungszusammensetzung umfasst Polyamin, ein blockiertes Polyamin oder eine Mischung davon.

Zweikomponenten-Beschichtungszusammensetzungen mit einer Harzkomponente (B), die als härtbaren Bestandteil mindestens ein Epoxid-Harz enthält, und einer Härterkomponente (A), die ein Aminhärter-System als Härtungsmittel für das Epoxid-Harz der Harzkomponente (B) und zudem Wasser enthält, sind im Stand der Technik bekannt. Solche reaktiven Kunststoffbeschichtungen werden beispielsweise als Grundierung oder als Verschleißschicht für den Schutz von mineralischem Untergrund (z.B. Beton) im Bereich von etwa Parkdecks, Garagen und anderen Flächen, beispielsweise als OS8-System, verwendet. OS8 beschreibt generell ein Oberflächenschutzsystem für Betonbodenplatten als befahrbares Beschichtungssystem. Eine OS 8-Beschichtung ist eine flüssig zu verlegende Beschichtung speziell für Fahrbahnen, Tiefgaragen, Rampen, etc. Sie kommt vor allem für Neubauten und die Sanierung von Tiefgaragen nach Schäden beziehungsweise Zerstörungen der alten Fahrbahndecke durch Streusalz als Oberflächenschutzsystem in Frage. Die OS 8-Beschichtung wird als Schutzsystem mit Mindestschichtdicken von 1,00 mm bis 5,00 mm aufgetragen, wobei in Fahrbahnbereichen 2,00 mm und in Rampenbereichen 3,00 mm Mindestdicke empfohlen werden. Das Schutzsystem beinhaltet: Grundierung, Kratz- und Egalisierungsspachtel, eine Verschleißschicht und eine Deckversiegelung. Es stellt den Schutz von Beton in Tiefgaragen und Parkhäusern bei folgender Problemstellung sicher:
Geschossdecken in Tiefgaragen und Parkhäusern und Betonbodenplatten in Tiefgaragen und Parkhäusern sind starker Beanspruchung ausgesetzt. Bewehrungskorrosion durch Rissbildung, eindringende Feuchtigkeit, Chloride durch Streusalze, Kohlenstoffdioxid (CO₂) und temperaturbedingte Formveränderungen sind dabei die größte Gefahr. In der Regel wird für einen rutschfesten Oberbelag eine Quarzsand-Einstreuung vorgenommen, um die Sicherheit von Personen und Fahrzeugen zu gewährleisten.

Bei der Umsetzung der Härterkomponente (A) mit der Harzkomponente (B) einer 2-Komponentenzusammensetzung ist die Einhaltung einer gewünschten Stöchiometrie, insbesondere in der Regel im Bereich einer (optimalen) 1: 1 Stöchiometrie, von besonderer Bedeutung für die Netzwerkbildung. Die optimale, d.h. die maximal mögliche Glasübergangstemperatur T_{g} des erhaltenen Netzwerkes wird in der Regel bei einem molaren Verhältnis der Reaktanden von 1: 1 erreicht. Liegt einer der beiden im Überschuss vor, so ist die T_{g} deutlich kleiner. Die T_{g} hat Einfluss auf die Festigkeit und Widerstandsfähigkeit der Verschleißschicht. Die Stöchiometrie wird aber auf nicht vorhersagbare Weise durch das Wasser in der Härterkomponente (A) beeinflusst. Auch der Vernetzungsgrad wird durch das Vorhandensein von Wasser beeinflusst. Grund dafür ist auch die Möglichkeit, dass Wasser als Nukleophil das Epoxidharz der Harzkomponente (B) angreifen und damit reagieren kann, d.h. Wasser tritt als Konkurrent zum aminischen Härter auf. Der Vernetzungsgrad und damit die Festigkeit und Widerstandsfähigkeit leidet durch diese Konkurrenzreaktion. Das Ausmaß in dem Wasser gemäß dieser Konkurrenzreaktion als Konkurrent zum aminischen Härter agiert hängt jedoch auch von baustellenseitigen Umständen ab, die nicht exakt und zuverlässig vorhergesagt werden können. Daher ist es bei derartigen Zweikomponenten-Beschichtungszusammensetzungen schwierig die gewünschte 1: 1 Stöchiometrie werksseitig sicher einzustellen. Die Ideal-Stöchiometrie liegt immer bei 1: 1. Für bestimmte Kundenbedürfnisse kann aber die Stöchiometrie leicht variieren, z.B. 1: 1,05. Es wird immer versucht eine gewünschte Stöchiometrie einzustellen, die sich aber baustellenseitig nicht unplanmäßig verändern sollte, was aufgrund des Wasseranteils in der Härterkomponente (A) schwierig ist.

Eine herkömmliche OS8-Beschichtung wird üblicherweise erhalten durch:
1. Aufbringen einer Grundierung/Verlaufspachtelung aus Epoxidharz,
2. Abstreuen der frischen Grundierspachtelung mit Quarzsand, und Abkehren des überschüssigen Sandes nach dem Aushärten der Grundierspachtelung, und
3. Aufbringen einer Kopfversiegelung mit lösemittelfreiem 2-komponentigen Epoxidharz.

Das Abstreuen der frischen Grundierspachtelung mit Quarzsand in einem separaten Arbeitsschritt ist herkömmlicherweise notwendig, um oberflächennah eine rutschhemmende Struktur ausbilden. Es ist in herkömmlichen Beschichtungssystemen nicht möglich Quarzsand oder Split bereits werksseitig zuzugeben, da solche Bestandteile mit Partikelgrößen im Millimeter-Bereich nicht dispergierfähig und nur schwer stabil in der Schwebe zu halten sind, ohne dass es zu einem raschen Absetzen der groben Partikel kommt, die nicht wieder aufrührbar sind. Daher sind baustellenseitig zusätzliche, zeitaufwändige Arbeitsschritte erforderlich. Neben dem Abstreuen einer frischen Grundierspachtelung mit Quarzsand ist es ferner notwendig, das Aushärten der Grundierspachtelung abzuwarten, und anschließend den überschüssigen Sand in einem weiteren separaten Arbeitsschritt abzukehren. Ferner sind Abstreuen und Zusammenkehren des Quarzsandes nicht nur aufwendig, sondern auch kostspielig und nicht nachhaltig. Der abgekehrte Sand ist nicht mehr sauber und hat in der Regel Anhaftungen, d.h. eine einfache Wiederverwendung des abgekehrten Sandes ist nicht möglich. Meist wird der abgekehrte Sand entsorgt.

Bodenbeschichtungen müssen zudem einen guten Verlauf aufweisen. Mit dem "*Verlauf*" der Beschichtung ist der horizontale Verlauf sowie auch der vertikale Verlauf der Beschichtung gemeint. *"Horizontaler Verlauf"* bedeutet, dass die Bodenbeschichtung über die gesamte horizontale Auftragungsoberfläche hinweg gute und gleichbleibende mechanische Eigenschaften, wie etwa Verschleißbeständigkeit, Rutschfestigkeit oder hohe Festigkeit und Härte, aufweisen muss. *"Vertikaler Verlauf"* bedeutet, dass sowohl am Boden der Beschichtung eine ausreichend feste Grundschicht zur Verankerung der Bodenbeschichtung auf dem mineralischen Untergrund ausgebildet wird, als auch, dass relativ oberflächennah Körnungsmaterial, wie etwa Quarzsand oder Split, zum Erreichen einer rutschhemmenden Struktur lokalisiert ist ("*Verschleißschicht"*). Der oberflächennahe Quarzsand/Split muss dabei aber immer noch von genügend Bindemittel vollständig umhüllt sein, um eine feste, harte (duroplastische), widerstandsfähige Verschleißschicht auszubilden. Aus diesem Grund werden herkömmliche OS8-Systeme üblicherweise als mehrschichtige Beschichtungen mit einer separaten Grundierspachtelung, einer auf die frische Grundierspachtelung aufgebrachten Schicht mit Körnungsmaterial und einer separaten Kopfversiegelung aufgebracht. Auch dadurch werden baustellenseitig weitere, zeitaufwendige Arbeitsschritte zum Aufbringen mehrerer verschiedener Schichten notwendig.

Aufgabe der vorliegenden Erfindung ist es Zweikomponenten-Beschichtungszusammensetzungen auf Basis wässriger Epoxid-Harze bereitzustellen, bei denen - unabhängig von den auf der Baustelle vorgefundenen Bedingungen - werksseitig eine gewünschte Stöchiometrie, wie beispielsweise eine optimale 1:1 Stöchiometrie, zwischen dem Aminhärter-System der Härterkomponente (A) und dem Epoxid-Harz der Harzkomponente (B) zuverlässig und sicher eingestellt werden kann.

In bevorzugten Ausführungsformen ist es darüber hinaus eine weitere Aufgabe der vorliegenden Erfindung Zweikomponenten-Beschichtungszusammensetzungen bereitzustellen, die vorzugsweise bereits werkseitig Körnungsmaterial enthalten.

In weiter bevorzugten Ausführungsformen ist es darüber hinaus eine weitere Aufgabe der vorliegenden Erfindung Zweikomponenten-Beschichtungszusammensetzungen bereitzustellen, die vorzugsweise sowohl eine gute Verankerung mit dem Untergrund als auch gleichzeitig eine rutschfeste und beständige Oberfläche gewährleisten, so dass das Aufbringen einer Bodenbeschichtung in einer Schicht (einschichtige Beschichtung) möglich ist.

### Zusammenfassung der Erfindung

Die vorliegende Erfindung betrifft eine Zweikomponenten-Beschichtungszusammensetzung mit einer Harzkomponente (B), die als härtbaren Bestandteil mindestens ein Epoxid-Harz enthält, und einer Härterkomponente (A), die ein Aminhärter-System als Härtungsmittel für das Epoxid-Harz der Harzkomponente (B) enthält, wobei
die Härterkomponente (A) weiterhin Wasser und mindestens ein Cellulose-Derivat enthält, und wobei
das Cellulose-Derivat eine Brookfield-Viskosität, bestimmt mittels Brookfield-Rotationsviskosimeter bei 25°C, 60 Upm, Spindel 2, an einer 5%igen Lösung in Wasser, von 2000 mPa·s oder weniger aufweist, und
das Gewichtsverhältnis von Wasser zu dem Cellulose-Derivat in der Härterkomponente (A) 10:1 bis 20:1 beträgt.

Ferner betrifft die Erfindung die Verwendung der erfindungsgemäßen Zweikomponenten-Beschichtungszusammensetzung als Bodenbeschichtung.

Weitere Ausführungsformen der vorliegenden Erfindung sind in der folgenden detaillierten Beschreibung und den angefügten Ansprüchen ausgeführt.

### Detaillierte Beschreibung der Erfindung

Wie vorstehend ausgeführt betrifft die vorliegende Erfindung in ihrer allgemeinen Form eine Zweikomponenten-Beschichtungszusammensetzung mit einer Harzkomponente (B), die als härtbaren Bestandteil mindestens ein Epoxid-Harz enthält, und einer Härterkomponente (A), die ein Aminhärter-System als Härtungsmittel für das Epoxid-Harz der Harzkomponente (B) enthält, wobei die Härterkomponente (A) weiterhin Wasser und mindestens ein Cellulose-Derivat enthält, und wobei das Cellulose-Derivat eine Brookfield-Viskosität, bestimmt mittels Brookfield-Rotationsviskosimeter bei 25°C, 60 Upm, Spindel 2, an einer 5%igen Lösung in Wasser, von 2000 mPa·s oder weniger aufweist, und das Gewichtsverhältnis von Wasser zu dem Cellulose-Derivat in der Härterkomponente (A) 10:1 bis 20:1 beträgt.

### Niederviskoses Cellulose-Derivat als Wasserretentionsmittel

Gemäß der vorliegenden Erfindung enthält die Härterkomponente (A) der Zweikomponenten-Beschichtungszusammensetzung ein niederviskoses Cellulose-Derivat mit einer Brookfield-Viskosität von 2000 mPa·s oder weniger. Im Rahmen der vorliegenden Erfindung beziehen sich Angaben zur Brookfield-Viskosität des Cellulose-Derivats immer auf eine Messung mittels Brookfield-Rotationsviskosimeter bei 25°C, 60 Upm, Spindel 2, an einer 5%igen Lösung in Wasser. In einer bevorzugten Ausführungsform beträgt die Brookfield-Viskosität des Cellulose-Derivats - gemessen mittels Brookfield-Rotationsviskosimeter bei 25°C, 60 Upm, Spindel 2, an einer 5%igen Lösung in Wasser - 1000 mPa·s oder weniger, stärker bevorzugt 500 mPa·s oder weniger. In einer weiteren Ausführungsform beträgt die Brookfield-Viskosität des Cellulose-Derivats vorzugsweise 200 mPa·s bis 500 mPa·s.

Der Typ des niederviskosen Cellulose-Derivats der vorliegenden Erfindung ist nicht besonders beschränkt. Im Prinzip kommen alle modifizierten Cellulosen und Cellulose-Derivate in Betracht. In einer bevorzugten Ausführungsform ist das Cellulose-Derivat ausgewählt aus Hydroxyethylcellulose (HEC), Methylcellulose (MC), Methylhydroxyethylcellulose (MHEC), Ethylhydroxyethylcellulose (E-HEC), Hydroxypropylcellulose (HPC), Carboxymethylcellulose (CMC) oder Carboxymethylhydroxyethylcellulose (CMHEC). In einer stärker bevorzugten Ausführungsform ist das Cellulose-Derivat aus Hydroxyethylcellulosen (HEC) ausgewählt.

Das niederviskose Cellulose-Derivat wird gemäß der Erfindung typischerweise in nur kleinen Mengen verwendet. Üblicherweise ist das Cellulose-Derivat in der Härterkomponente (A) in einer Menge von 0,4 bis 4,0 Gew.%, bezogen auf das Gesamtgewicht der Härterkomponente (A), enthalten. In einer bevorzugten Ausführungsform ist das Cellulose-Derivat in der Härterkomponente (A) in einer Menge von 0,5 bis 3,0 Gew.%, vorzugsweise 0,5 bis 2,0 Gew.% enthalten, jeweils bezogen auf das Gesamtgewicht der Härterkomponente (A).

Im Stand der Technik ist bekannt Cellulose-Derivate als Rheologie-Additive bzw. Verdicker zu verwenden. Beispielsweise sind in der EP 1 937 891 Innen- und Außenwandfarben beschrieben, die Cellulose-Derivate als Verdicker und Rheologiegeber enthalten. Cellulose-Derivate für solche Einsatzzwecke weisen jedoch wesentlich höhere Viskositäten als die erfindungsgemäß verwendeten niederviskosen Cellulose-Derivate auf.

Im Gegensatz dazu wird die Viskosität der resultierenden Härterkomponente (A) gemäß der Erfindung durch das niederviskose Cellulose-Derivat nicht oder kaum beeinflusst. Des niederviskose Cellulose-Derivat wirkt in der vorliegenden Erfindung vielmehr als Wasserretentionsmittel. Die Erfinder der vorliegenden Erfindung haben gefunden, dass niederviskoses Cellulose-Derivat das in der Härterkomponente (A) vorhandene Wasser bindet, so dass es für die unerwünschte Nebenreaktion mit dem Epoxidharz der Harzkomponente (B) nicht zur Verfügung steht. Dadurch kann erfindungsgemäß eine gewünschte Stöchiometrie, insbesondere auch eine optimale 1:1 Stöchiometrie, zwischen dem Aminhärter-System der Härterkomponente (A) und dem Epoxid-Harz der Harzkomponente (B) werksseitig sicher und zuverlässig eingestellt werden, und zwar unabhängig von den auf der Baustelle vorgefundenen, nicht vorhersagbaren Bedingungen.

Wie vorstehend ausgeführt enthält die Härterkomponente (A) der erfindungsgemäßen Zweikomponenten-Beschichtungszusammensetzung weiterhin Wasser. D.h. gemäß der Erfindung kann eine Zweikomponenten-Beschichtungszusammensetzung bereitgestellt werden, die frei von organischen Lösungsmitteln ist. Das Gewichtsverhältnis von Wasser zu dem Cellulose-Derivat in der Härterkomponente (A) beträgt 10:1 bis 20:1. In diesem Bereich ist eine gute Wasserbindung durch das Cellulose-Derivat gewährleistet, so dass das in der Härterkomponente (A) weiterhin enthaltene Wasser nicht für unerwünschte Nebenreaktionen mit dem Epoxidharz der Harzkomponente (B) zur Verfügung steht. In einer bevorzugten Ausführungsform beträgt das Gewichtsverhältnis von Wasser zu dem Cellulose-Derivat in der Härterkomponente (A) 12:1 bis 18:1. In einer weiteren bevorzugten Ausführungsform liegt das Gewichtsverhältnis von Wasser zu dem Cellulose-Derivat im Bereich von etwa 15:1.

Bei der Herstellung der Härterkomponente (A) wird das niederviskose Cellulose-Derivat üblicherweise als wässrige Lösung oder wässrige Suspension zugegeben. Dies liegt daran, dass - wie vorstehend ausgeführt - nur relativ kleine Mengen an Cellulose-Derivat verwendet werden und kleine Mengen besser dosiert werden können, wenn eine wässrige Lösung eingesetzt wird. Zudem kann auf diese Weise eine klumpenfreie Zugabe des Cellulose-Derivats erfolgen. Beispielsweise wird das niederviskose Cellulose-Derivat der Härterkomponente (A) als Mischung von 80 Teilen Wasser und 20 Teilen Cellulose-Derivat zugegeben. Das dabei in die Härterkomponente (A) eingebrachte Wasser wird bei der Einstellung des vorstehend beschriebenen Gesamtgewichtsverhältnisses von Wasser zu dem Cellulose-Derivat in der resultierenden Härterkomponente (A) mit berücksichtigt.

Die Gesamtmenge an Wasser in der Härterkomponente (A) beträgt üblicherweise 10 bis 30 Gew.%, bezogen auf das Gesamtgewicht der Härterkomponente (A), vorzugsweise 12 bis 25 Gew.%, stärker bevorzugt 15 bis 22 Gew.%.

Das in der Härterkomponente (A) verwendete Aminhärter-System ist gemäß der Erfindung nicht besonders beschränkt. Beispielsweise können die im Stand der Technik üblichen Aminhärter-Systeme eingesetzt werden. Illustrative Beispiele umfassen, sind aber nicht beschränkt auf aliphatische bzw. cycloaliphatische Amine, wie zum Beispiel Diethylentriamin, 4,4'-Methylenbis(cyclohexylamin), Aminoethylpiperazin, 1,3-Benzoldimethanamin (MXDA), Isophorondiamin (IPDA), und/oder Polyetheramine. In einer Ausführungsform wird ein Epoxid-Polyamin-Addukt als Aminhärter-System verwendet, bevorzugt MXDA-Addukte oder IPDA-Addukte insbesondere Isophorondiamin-Addukt an Epoxidharz DGEBA.

Das Aminhärter-System ist in der Härterkomponente (A) typischerweise in einer Menge von 2,5 bis 18 Gew.%, bezogen auf das Gesamtgewicht der Härterkomponente (A), enthalten. In einer bevorzugten Ausführungsform ist das Aminhärter-System in der Härterkomponente (A) in einer Menge von 2,5 bis 13,5 Gew.%, vorzugsweise 4,5 bis 11,5 Gew.%, stärker bevorzugt 4,5 bis 9 Gew.% enthalten, jeweils bezogen auf das Gesamtgewicht der Härterkomponente (A).

Das in der Harzkomponente (B) verwendete Epoxid-Harz ist gemäß der Erfindung nicht besonders beschränkt. Im Prinzip können die im Stand der Technik bekannten, handelsüblichen Epoxidharze eingesetzt werden. Illustrative Beispiele davon beinhalten, sind aber nicht beschränkt auf Diglycidylether von Bisphenol A, Diglycidylether von Bisphenol F oder Gemischen davon. In einer bevorzugten Ausführungsform ist das Epoxid-Harz in der Harzkomponente (B) ein Gemisch aus einem Diglycidylether von Bisphenol A und einem ein Diglycidylether von Bisphenol F.

Epoxidharze bilden den Hauptteil der Harzkomponente (B). Typischerweise enthält die Harzkomponente (B) 55 bis 95 Gew.%, wie etwa 75 bis 95 Gew.%, an Epoxidharzen, bezogen auf das Gesamtgewicht der Harzkomponente (B). In einer Ausführungsform enthält die Harzkomponente (B) 50 bis 90 Gew.% an Diglycidylether von Bisphenol A und 5 bis 25 Gew.% an Diglycidylether von Bisphenol F. In einer bevorzugten Ausführungsform enthält die Harzkomponente (B) 55 bis 80 Gew.%, stärker bevorzugt 60 bis 75 Gew.% an Diglycidylether von Bisphenol A und 10 bis 25 Gew.%, stärker bevorzugt 10 bis 20 Gew.% an Diglycidylether von Bisphenol F, jeweils bezogen auf das Gesamtgewicht der Harzkomponente (B).

Weitere gegebenenfalls optionale Bestandteile der erfindungsgemäßen Zweikomponenten-Beschichtungszusammensetzung sind nachstehend beschrieben.

### Härterkomponente (A) enthält vorzugsweise Körnungsmaterial

In einer bevorzugten Ausführungsform der vorliegenden Erfindung enthält die Härterkomponente (A) weiterhin Körnungsmaterial. Unter *"Körnungsmaterial"* werden erfindungsgemäß alles gängigen Gesteinskörnungen auf silikatischer Basis oder künstliche, gekörnte Zuschläge verstanden, die eine Korngröße von mindestens 0,1 mm aufweisen. Im Rahmen der vorliegenden Erfindung beziehen sich Angaben zur Korngröße des Körnungsmaterials auf eine Messung mittels Siebanalyse gemäß DIN 66165-1:2016-08. In einer bevorzugten Ausführungsform beträgt die Korngröße des Körnungsmaterials 0,1 mm bis 4 mm, stärker bevorzugt 0,2 mm bis 3,0 mm. In einer weiteren bevorzugten Ausführungsform ist die Korngrößenverteilung des Körnungsmaterials mindestens bimodal, wie etwa bimodal, trimodal, etc.

Als Körnungsmaterial gemäß der Erfindung eignen sich beispielsweise Gesteinskörnungen auf silikatischer Basis, wie etwa Quarz, Cristobalit, Glimmer, Feldspat, Gneis, oder Granit. Weiterhin geeignet als Körnungsmaterial sind künstliche, gekörnte Zuschläge, wie etwa Kunststeingranulat oder Glas. Ferner sind Gemische aus Gesteinskörnungen auf silikatischer Basis und künstlichen, gekörnten Zuschläge als Körnungsmaterial gemäß der Erfindung geeignet. In einer bevorzugten Ausführungsform wird das Körnungsmaterial aus Quarz oder Granit ausgewählt. In einer stärker bevorzugten Ausführungsform enthält das Körnungsmaterial sowohl Quarz als auch Granit, wie etwa Quarzsand und Granitsplitt. In einer besonders bevorzugten Ausführungsform ist das Körnungsmaterial in der Härterkomponente (A) ein Gemisch aus Quarz mit einer Korngröße von 0,2 mm bis 2,2 mm und Granit mit einer Korngröße von 1,0 mm bis 2,0 mm.

Die Menge an Körnungsmaterial in der Härterkomponente (A) beträgt beispielsweise 45 bis 80 Gew.%, bezogen auf das Gesamtgewicht der Härterkomponente (A). In einer bevorzugten Ausführungsform enthält die Härterkomponente (A) 50 bis 75 Gew.%, vorzugsweise 55 bis 70 Gew.% an Körnungsmaterial, jeweils bezogen auf das Gesamtgewicht der Härterkomponente (A).

In herkömmlichen Beschichtungssystemen aus dem Stand der Technik ist es nicht möglich Körnungsmaterial bereits direkt werksseitig zuzugeben, da Bestandteile mit Partikelgrößen im Millimeter-Bereich nicht stabil dispergierfähig sind. Vielmehr kommt es zu einem raschen Absetzen der groben Partikel. Dadurch werden auf der Baustelle zusätzliche separate Arbeitsschritte notwendig. Die Erfinder der vorliegenden Erfindung haben jedoch gefunden, dass das als Wasserretentionsmittel in der Härterkomponente (A) enthaltene Cellulose-Derivat gleichzeitig auch die Eigenschaft hat größere Partikel, wie Körnungsmaterial, zu dispergieren und in der Härterkomponente (A) zu stabilisieren, d.h. in der Schwebe zu halten. Dadurch wird es gemäß dieser bevorzugten Ausführungsform möglich der Zweikomponenten-Beschichtungszusammensetzung bereits werkseitig ausreichend Körnungsmaterial in Härterkomponente (A) zuzugeben. Auf diese Weise können baustellenseitig viele Arbeitsschritte, wie etwa Absanden, Abkehren des überschüssigen Sandes nach dem Aushärten der Grundierung/Verlaufspachtelung, etc., eingespart werden, was für die Arbeitsabläufe auf der Baustelle einen erheblichen Vorteil darstellt. Ebenso wird gemäß dieser Ausführungsform die mit dem Absanden und Abkehren verbundene unerwünschte Staubbildung vermieden.

### Härterkomponente (A) enthält vorzugsweise Füllstoff

In einer bevorzugten Ausführungsform der vorliegenden Erfindung enthält die Härterkomponente (A) weiterhin mindestens einen Füllstoff. Im Gegensatz zum vorstehend beschriebenen Körnungsmaterial werden im Rahmen der vorliegenden Erfindung werden unter *"Füllstoff"* Feinfüllstoffe mit kleineren Partikelgrößen verstanden. In einer Ausführungsform weist der mindestens eine Füllstoff einen Medianwert der Partikelgröße D₅₀ von 1 µm bis 100 µm auf. Der Medianwert D₅₀, der auch Halbwertskorngröße genannt wird, gibt die mittlere Partikelgröße eines Füllstoffs an, so dass der Anteil der Partikel, die größer als der D₅₀-Wert sind, gleich dem Anteil der Partikel ist, die kleiner als der D₅₀-Wert sind. Die Bestimmung dieser Werte erfolgt bevorzugt nach DIN ISO 9276-1:2004-09 (Darstellung der Ergebnisse von Partikelgrößenanalysen - Teil 1: grafische Darstellung) und ISO 9276-2:2014-05 (Darstellung der Ergebnisse von Partikelgrößenanalysen - Teil 2: Berechnungen von mittleren Partikelgrößen/-durchmessern und Momenten aus Partikelgrößenverteilungen). Zur Größenbestimmung kann beispielsweise ein Mastersizer 3000 der Firma Malvern Instruments Limited eingesetzt werden. In der Regel können diese Werte auch einfach einem technischen Datenblatt entnommen werden. In einer bevorzugten Ausführungsform weist der mindestens eine Füllstoff einen Medianwert der Partikelgröße D₅₀ von 1 µm bis 50 µm, vorzugsweise 1 µm bis 30 µm auf.

Der Typ des mindestens einen Füllstoffs ist erfindungsgemäß nicht besonders beschränkt. Bevorzugt werden im allgemeinen silikatische Füllstoffe und/oder sulfatische Füllstoffe sowie Gemische davon. In einer Ausführungsform ist der mindestens eine Füllstoff ausgewählt aus Quarz, Cristobalit, Schichtsilikaten, Talkum, Kaolin, Glimmer und Erdalkalisulfaten. Aufgrund der schwierigeren Dispergierbarkeit werden gemäß der Erfindung vorzugsweise keine carbonatischen Füllstoffe verwendet.

In einer weiteren Ausführungsform weist der mindestens eine Füllstoff eine Ölzahl von 20 oder weniger auf. Im Rahmen der vorliegenden Erfindung werden Ölzahlen der Füllstoffe gemäß DIN EN ISO 787-5 bestimmt. Die Ölzahl der Füllstoffe liefert Informationen über die Morphologie der Partikel, und entspricht der Menge Lackleinöl, die zur vollständigen Benetzung einer Füllstoffprobe unter vorgegebenen Bedingungen erforderlich ist. Die Ölzahl ist insbesondere abhängig vom Oberflächen/Volumenverhältnis und der Morphologie der Füllstoffpartikel. Hierbei spielen die Form und die Größe der Partikel eine Rolle. Während sich kompakte, runde Formen günstig auf eine niedrige Ölzahl auswirken, führen plättchen- oder stabförmige Füllstoffpartikel zu einer Erhöhung der Ölzahl. Erfindungsgemäß werden vorzugsweise Feinfüllstoffe mit kompakter, runder Teilchenform, d.h. einer Ölzahl von 20 oder weniger, verwendet, die schneller absinken. Feinfüllstoffe mit niedrigen Ölzahlen können auch zu relativ dichten Kugelpackungen gepackt werden, was Einfluss auf die Elastizität und Festigkeit des resultierenden Beschichtungsfilms hat. In einer bevorzugten Ausführungsform weist der mindestens eine Füllstoff eine Ölzahl von 15 oder weniger, vorzugsweise 10 oder weniger, auf.

Füllstoffe im Sinne der vorliegenden Erfindung, wie vorstehend ausgeführt, sind in der Härterkomponente (A) gemäß dieser Ausführungsform in einer Gesamtmenge von vorzugsweise 2 bis 15 Gew.% enthalten, bezogen auf das Gesamtgewicht der Härterkomponente (A). In einer bevorzugten Ausführungsform ist Füllstoff in einer Gesamtmenge von 3 bis 12 Gew.%, stärker bevorzugt 4 bis 10 Gew.%, enthalten, jeweils bezogen auf das Gesamtgewicht der Härterkomponente (A).

In einer Ausführungsform wird ein Gemisch aus harten Füllstoffen (FH) und weichen Füllstoffen (FW) eingesetzt, wobei sich die Bergriffe "*hart*" oder "*weich*" auf die Mohs-Härte des fraglichen Füllstoffs beziehen. Vorzugsweise liegen gemäß dieser Ausführungsform gewichtsanteilig mehr weiche Füllstoffe (FW) als harte Füllstoffe (FH) vor, wie etwa mehr als 50 Gew.% an weichen Füllstoffen (FW) und weniger als 50 Gew.% an harten Füllstoffen (FH), bezogen auf das Gesamtgewicht der in der Härterkomponente (A) vorliegenden Füllstoffe. Die Mohs-Härte des mindestens einen weichen Füllstoffs (FW) liegt dabei vorzugsweise bei von 5 oder weniger, stärker bevorzugt bei 4 oder weiniger, wie etwa 3,5 oder weniger. Die Mohs-Härte des mindestens einen harten Füllstoffs (FH) liegt mehr als 5, vorzugsweise 6 oder mehr, stärker bevorzugt 6,5 oder mehr.

In einer bevorzugten Ausführungsform liegen in der Härterkomponente (A) sowohl ein Gemisch aus harten Füllstoffen (FH) und weichen Füllstoffen (FW) als auch Körnungsmaterial, wie weiter vorstehend beschrieben, vor. Die Funktion der weichen Füllstoffe (FW) gemäß dieser Ausführungsform ist eine Art "*Feststoff-Schmierung*" zwischen den größeren Partikeln des Körnungsmaterials. Der harte Füllstoff (FH) trägt gemäß dieser Ausführungsform zur mechanischen Festigkeit der Beschichtung bei.

In einer weiteren Ausführungsform enthält der Füllstoff bzw. das Füllstoffgemisch zumindest zum Teil mindestens einen Füllstoff, der eine Rohdichte von mindestens 3,5 g/cm³ aufweist. Angaben zur Rohdichte eines Füllstoffs beziehen sich im Rahmen der vorliegenden Erfindung auf eine Bestimmung gemäß DIN EN ISO 787-10: 1995. Bevorzugt weist der überwiegende Anteil der in der Harzkomponente (A) insgesamt vorhandenen Füllstoffe, wie etwa mehr als 50 Gew.%, bezogen auf das Gesamtgewicht der Füllstoffe in der Harzkomponente (A), eine Rohdichte von mindestens 3,5 g/cm³ auf. In einer bevorzugten Ausführungsform enthält der Füllstoff zumindest zum Teil mindestens einen Füllstoff, der eine Rohdichte von mindestens 4,0 g/cm³, vorzugsweise mindestens 4,2 g/cm³, aufweist. In einer weiteren bevorzugten Ausführungsform enthält der Füllstoff mindestens Bariumsulfat.

In einer bevorzugten Ausführungsform betrifft die vorliegende Erfindung eine Zweikomponenten-Beschichtungszusammensetzung mit einer Harzkomponente (B), die als härtbaren Bestandteil mindestens ein weiter vorstehend beschriebenes Epoxid-Harz enthält, und einer Härterkomponente (A), die ein weiter vorstehend beschriebenes Aminhärter-System als Härtungsmittel für das Epoxid-Harz der Harzkomponente (B) enthält, wobei die Härterkomponente (A) weiterhin Wasser, mindestens ein weiter vorstehend beschriebenes Cellulose-Derivat, mindestens ein weiter vorstehend beschriebenes Körnungsmaterial und ein weiter vorstehend beschriebenes Gemisch aus mindestens einem weichen Füllstoff (FW) und mindestens einem harten Füllstoff (FH) enthält, wobei das Cellulose-Derivat eine Brookfield-Viskosität, bestimmt mittels Brookfield-Rotationsviskosimeter bei 25°C, 60 Upm, Spindel 2, an einer 5%igen Lösung in Wasser, von 2000 mPa·s oder weniger aufweist, das Gewichtsverhältnis von Wasser zu dem Cellulose-Derivat in der Härterkomponente (A) 10:1 bis 20:1 beträgt, das Körnungsmaterial eine Korngröße, bestimmt mittels Siebanalyse gemäß DIN 66165-1:2016-08, von mindestens 0,1 mm aufweist, der mindestens eine weiche Füllstoff (FW) eine Mohs-Härte von 5 oder weniger, vorzugsweise 4 oder weiniger, aufweist, der mindestens eine harte Füllstoff (FH) eine Mohs-Härte von mehr als 5, vorzugsweise 6 oder mehr, aufweist, und sowohl der mindestens eine weiche Füllstoff (FW) als auch der mindestens eine harte Füllstoff (FH) einen Medianwert der Partikelgröße D₅₀, bestimmt gemäß DIN ISO 9276-1:2004-09, von 1 µm bis 100 µm aufweist. In einer stärker bevorzugten Ausführungsform betrifft die vorliegende Erfindung ferner eine Zweikomponenten-Beschichtungszusammensetzung mit einer Harzkomponente (B), die als härtbaren Bestandteil mindestens ein Epoxid-Harz enthält, und einer Härterkomponente (A), die ein Aminhärter-System als Härtungsmittel für das Epoxid-Harz der Harzkomponente (B) enthält, wobei die Härterkomponente (A) weiterhin Wasser, mindestens ein Cellulose-Derivat, mindestens ein Körnungsmaterial und ein Gemisch aus mindestens einem weichen Füllstoff (FW) und mindestens einem harten Füllstoff (FH) enthält, wobei das Cellulose-Derivat eine Brookfield-Viskosität, bestimmt mittels Brookfield-Rotationsviskosimeter bei 25°C, 60 Upm, Spindel 2, an einer 5%igen Lösung in Wasser, von 2000 mPa·s oder weniger aufweist, das Gewichtsverhältnis von Wasser zu dem Cellulose-Derivat in der Härterkomponente (A) 10:1 bis 20:1 beträgt, das Körnungsmaterial eine Korngröße, bestimmt mittels Siebanalyse gemäß DIN 66165-1:2016-08, von mindestens 0,1 mm aufweist, der mindestens eine weiche Füllstoff (FW) eine Mohs-Härte von 5 oder weniger, vorzugsweise 4 oder weiniger, aufweist, der mindestens eine harte Füllstoff (FH) eine Mohs-Härte von mehr als 5, vorzugsweise 6 oder mehr, aufweist, sowohl der mindestens eine weiche Füllstoff (FW) als auch der mindestens eine harte Füllstoff (FH) einen Medianwert der Partikelgröße D₅₀, bestimmt gemäß DIN ISO 9276-1:2004-09 und ISO 9276-2:2014-05, von 1 µm bis 100 µm aufweist, und der mindestens eine weiche Füllstoff (FW) eine Rohdichte von mindestens 3,5 g/cm³ aufweist.

Bevorzugt ist gemäß letzteren Ausführungsformen der weiche Füllstoff (FW) Bariumsulfat (Schwerspat, BaSO₄) und der harte Füllstoff (FH) ist ausgewählt aus Quarz und/oder Cristobalit, wobei vorzugsweise Bariumsulfat mit mehr als 50 Gew.% vorliegt, bezogen auf das Gesamtgewicht aller Füllstoffe in der Härterkomponente (A). Quarz und Cristobalit zeichnen sich durch eine hohe Härte und eine niedrige Ölzahl aus. Bariumsulfat ist schwer, d.h. hat eine hohe Rohdichte (Rohdichte von 4,5 g/cm³), weich und hat in der Regel ebenfalls eine niedrige Ölzahl. Bariumsulfat hat darüber hinaus auch den Vorteil, dass sich auf dessen Oberfläche nicht so viele OH-Gruppen befinden wie beim Quarz, Cristobalit oder Granit, d.h. BaSO₄ ist weniger polar und wechselwirkt weniger gut mit dem erfindungsgemäß verwendeten Cellulose-Derivat. Dadurch können sich Feinfüllstoffe mit einer hohen Rohdichte, wie etwa BaSO₄, durch die Schwerkraft getrieben bodennah sammeln und dort eine Grundschicht ausbilden. In einer Ausführungsform wird hier BaSO₄ mit einem Medianwert der Partikelgröße D₅₀ von 10 µm oder weniger (z.B. 1 bis 10 µm) verwendet.

Gemäß letzteren Ausführungsformen der vorliegenden Erfindung ist es möglich eine Beschichtungszusammensetzung bereitzustellen, die bereits werkseitig ausreichend Körnungsmaterial enthält, einen guten horizontalen und vertikalen Verlauf erzielt, und sowohl eine gute Verankerung mit dem Untergrund als auch gleichzeitig eine hohe Rutschfestigkeit an der Oberfläche sowie hohe mechanische Widerstandsfähigkeit bietet. Dadurch ist es erstmals möglich eine Beschichtungszusammensetzung, wie etwa eine OS8-Beschichtung, bereitzustellen, die in nur einem Arbeitsschritt als einschichtige Beschichtung aufgebracht werden kann, mit gleichbleibenden oder sogar verbesserten Ergebnissen im Vergleich zu dem im Stand der Technik etablierten mehrschichtigen Verfahren. Auf diese Weise können auf der Baustelle Arbeitsschritte und Arbeitszeit in erheblichem Umfang eingespart werden.

### Weitere optionale Bestandteile

Die Harzkomponente (B) der vorliegenden Erfindung besteht überwiegend aus den weiter vorstehend beschriebenen Epoxid-Harzen. Gegebenenfalls kann die Harzkomponente (B) darüber hinaus auch Reaktivverdünner enthalten. Geeignete Reaktivverdünner sind im Stand der Technik bekannt. Illustrative Beispiele umfassen, sind aber nicht beschränkt auf glycidylfunktionalisierte Alkohole, wie z.B. C₁₂-C₁₄ aliphatische Glycidylether oder Diglycidylether von Butandiol, Hexandiol, Neopentylglykol, Polypropylenglykol. Ferner eignet sich zusätzlich Propylencarbonat als ergänzender Reaktivverdünner zu den glycidylfunktionalisierten Alkoholen.

In einer Ausführungsform enthält die Harzkomponente (B) 5 bis 25 Gew.%, vorzugsweise 10 bis 25 Gew.%, stärker bevorzugt 10 bis 20 Gew.% an Reaktivverdünner, bezogen auf das Gesamtgewicht der Harzkomponente (B).

Die Harzkomponente (B) ist gemäß der Erfindung in der Regel frei von organischen Lösungsmitteln.

Wesentliche und bevorzugte Bestandteile der Härterkomponente (A) gemäß der vorliegenden Erfindung sind weiter vorstehend beschrieben. Darüber hinaus kann die Härterkomponente (A) auch weitere optionale Bestandteile enthalten.

In einer Ausführungsform enthält die Härterkomponente (A) gegebenenfalls auch ein oder mehrere Pigmente. Geeignete Pigmente sind im Stand der Technik grundsätzlich bekannt. Illustrative Bespiele umfassen, sind aber nicht beschränkt auf anorganische Weißpigmente, wie etwa Titandioxid, Zinkweiß, Zinksulfid, Lithopone und/oder Ettringit, anorganische Schwarzpigmente, wie etwa Eisenoxidschwarz, Eisen-Mangan-Schwarz, Spinellschwarz und/oder Ruß, und/oder anorganische Buntpigmente wie Chromoxid, Chromoxidhydratgrün, Chromgrün, Cobaltgrün, Ultramaringrün, Kobaltblau, Ultramarinblau, Manganblau, Ultramarinviolett, Kobalt- und Manganviolett, Eisenoxidrot, Cersulfid, Molybdatrot, Ultramarinrot, Eisenoxidbraun, Mischbraun, Spinell- und Korundphasen, Chromtitangelb, Zinnzinktitanat, Chromorange, Eisenoxidgelb, Nickeltitangelb, Chromgelb und/oder Bismutvanadat. Unter den genannten Pigmenten wird häufig zurückgegriffen auf z.B. Titandioxid, Zinksulfid, Zinkoxid, Eisenoxid, Chromoxid, Kobaltblau, Spinellpigment, Nickeltitanat, Chromtitanat und deren beliebige Mischungen. In einer Ausführungsform werden Pigmente mit einer Rohdichte von 4 g/cm³ oder mehr verwendet.

In einer Ausführungsform enthält die Härterkomponente (A) 0 bis 12 Gew.%, wie etwa 1 bis 12 Gew.%, vorzugsweise 1 bis 10 Gew.%, stärker bevorzugt 2 bis 8 Gew.% an Pigmenten, bezogen auf das Gesamtgewicht der Härterkomponente (A).

In einer weiteren Ausführungsform enthält die Härterkomponente (A) gegebenenfalls auch ein oder mehrere Rheologieadditive. Rheologieadditive (Verdicker) können zur Feinjustierung der Viskosität eingesetzt werden. Geeignete Rheologieadditive sind im Stand der Technik bekannt. Illustrative Beispiele beinhalten, sind aber nicht beschränkt auf polymerbasierte Rheologieadditive, wie beispielsweise wie synthetische Polymere und Copolymere auf Basis Methacryl, Acryl, Vinyl und Polyurethan. Weniger geeignet gemäß der vorliegenden Erfindung sind dagegen organische, modifizierte Materialien auf Basis Guar, Alginate, Pektin, Xanthan, Traganat Gum und auch Stärke, sowie anorganische Verdicker wie Bentonite. In einer Ausführungsform der Erfindung werden polymere Acrylatverdicker oder Polyurethanverdicker als Rheologieadditiv verwendet.

In einer Ausführungsform enthält die Härterkomponente (A) 0 bis 0,1 Gew.%, wie etwa 0,01 bis 0,1 Gew.%, vorzugsweise 0,01-0,06 Gew.%, stärker bevorzugt 0,01-0,04 Gew.% an Rheologieadditiv, bezogen auf das Gesamtgewicht der Härterkomponente (A).

Die Härterkomponente (A) kann auch weitere Additive enthalten. Gemeint sind hier alle dem Fachmann bekannten Additive, wie etwa Additive zur Entlüftung bzw. Entschäumung (bevorzugt Siloxane), Oberflächenmodifizierung (Mattierung, Gleitfähigkeit, Kratzfestigkeit - z.B. Silikone, Wachse, Kieselsäuren), Verlaufsmodifizierung (z.B. Silikone, Tenside, Lösemittel), Lichtschutzmittel, UV-Absorber, Flammschutzmittel, Antistatika, Hautverhinderungsmittel, Korrosionsinhibitoren, Stabilisatoren, Katalysatoren, etc. In einer Ausführungsform sind derartige weitere Additive in der Härterkomponente (A) in einer Menge von insgesamt gegebenenfalls 0 bis 2,0 Gew.%, vorzugsweise 0,1 bis 2,0 Gew.%, stärker bevorzugt 0,1 bis 1,5 Gew.%, noch stärker bevorzugt 0,1 bis 1,0 Gew.%, enthalten, bezogen auf das Gesamtgewicht der Härterkomponente (A).

Bevorzugt werden gemäß der Erfindung keine weiteren Netz- und Dispergiermittel verwendet. D.h. herkömmliche Dispergiermittel, wie beispielsweise Polycarboxylate, insbesondere Salze von Polyacrylsäuren, Polyphosphate, Polycarbonsäurepolymere, Fettalkoholderivate oder Aminverbindungen als Dispergiermittel, sind in der Zweikomponenten-Beschichtungszusammensetzung der vorliegenden Erfindung vorzugsweise nicht enthalten.

Die Härterkomponente (A) ist gemäß der Erfindung in der Regel frei von organischen Lösungsmitteln.

### Beschichtungszusammensetzung und Verwendung

In einer Ausführungsform umfasst die Härterkomponente (A), jeweils bezogen auf das Gesamtgewicht der Härterkomponente (A):
2,5 bis 18 Gew.%, vorzugsweise 2,5 bis 13,5 Gew.%, stärker bevorzugt 4,5 bis 11,5 Gew.%, noch stärker bevorzugt 4,5 bis 9 Gew.% an Aminhärter-System,
0,4 bis 4,0 Gew.%, vorzugsweise 0,5 bis 3,0 Gew.%, stärker bevorzugt 0,5 bis 2,0 Gew.% an Cellulose-Derivat,
10 bis 30 Gew.%, vorzugsweise 12 bis 25 Gew.%, stärker bevorzugt 15 bis 22 Gew.% an Wasser,
gegebenenfalls 45 bis 80 Gew.%, vorzugsweise 50 bis 75 Gew.%, stärker bevorzugt 55 bis 70 Gew.% an Körnungsmaterial,
gegebenenfalls 2 bis 15 Gew.%, vorzugsweise 3 bis 12 Gew.%, stärker bevorzugt 4 bis 10 Gew.% an Füllstoff,
gegebenenfalls 0 bis 12 Gew.%, vorzugsweise 1 bis 10 Gew.%, stärker bevorzugt 2 bis 8 Gew.% an Pigment,
gegebenenfalls 0 bis 0,1 Gew.%, vorzugsweise 0,01 bis 0,06 Gew.%, stärker bevorzugt 0,01 bis 0,04 Gew.% an Rheologieadditiv, und
gegebenenfalls 0 bis 2,0 Gew.%, vorzugsweise 0,1 bis 2,0 Gew.%, stärker bevorzugt 0,1 bis 1,5 Gew.%, noch stärker bevorzugt 0,1 bis 1,0 Gew.% an weiteren Additiven.

In einer Ausführungsform besteht die Härterkomponente (A) im Wesentlichen aus den unmittelbar vorstehend genannten Komponenten in den unmittelbar vorstehend genannten Mengen oder bevorzugten Mengen. In einer weiteren Ausführungsform besteht die Härterkomponente (A) aus den unmittelbar vorstehend genannten Komponenten in den unmittelbar vorstehend genannten Mengen oder bevorzugten Mengen.

In einer Ausführungsform umfasst die Harzkomponente (B), jeweils bezogen auf das Gesamtgewicht der Harzkomponente (B):
50 bis 90 Gew.%, vorzugsweise 55 bis 80 Gew.%, stärker bevorzugt 60 bis 75 Gew.% an Diglycidylether von Bisphenol A,
5 bis 25 Gew.%, vorzugsweise 10 bis 25 Gew.%, stärker bevorzugt 10 bis 20 Gew.% an Diglycidylether von Bisphenol F, und
gegebenenfalls 5 bis 25 Gew.%, 10 bis 25 Gew.%, stärker bevorzugt 10 bis 20 Gew.% an Reaktivverdünner.

In einer Ausführungsform besteht die Harzkomponente (B) im Wesentlichen aus den unmittelbar vorstehend genannten Komponenten in den unmittelbar vorstehend genannten Mengen oder bevorzugten Mengen. In einer weiteren Ausführungsform besteht die Harzkomponente (B) aus den unmittelbar vorstehend genannten Komponenten in den unmittelbar vorstehend genannten Mengen oder bevorzugten Mengen.

Die Zweikomponenten-Beschichtungszusammensetzung der vorliegenden Erfindung ist in der Regel frei von organischen Lösungsmitteln.

In der Zweikomponenten-Beschichtungszusammensetzung gemäß der vorliegenden Erfindung sind die Härterkomponente (A) und die Harzkomponente (B) in voneinander getrennten Behältnissen angeordnet. Das Gewichtsverhältnis des Gesamtgewichts der Härterkomponente (A) zu dem Gesamtgewicht der Harzkomponente (B) ist dabei von den jeweiligen Konzentrationen der reaktiven Bestandteile abhängig. Beispielsweise hängt das Gewichtsverhältnis des Gesamtgewichts der Härterkomponente (A) zu dem Gesamtgewicht der Harzkomponente (B) vom gewählten Aminhärter-System in der Härterkomponente (A) (z.B. Aminkonzentration, etc.) ab. Ein Fachmann ist in der Lage die reaktive Menge bzw. Stöchiometrie des Aminhärter-Systems in der Härterkomponente (A) und der Epoxid-Harze in der Harzkomponente (B) zu ermitteln, und daraufhin die Stöchiometrie in der Zweikomponenten-Beschichtungszusammensetzung, d.h. das Verhältnis von Härterkomponente (A) zu Harzkomponente (B), wie gewünscht einzustellen. Amine in der Härterkomponente (A) können stöchiometrisch in Bezug auf die Epoxid-Harze in der Harzkomponente (B) eingesetzt werden. Ein Vorteil der vorliegenden Erfindung ist, dass dabei eine gewünschte Stöchiometrie, beispielsweise eine optimale 1: 1 Stöchiometrie, zwischen den Aminen im Aminhärter-System der Härterkomponente (A) und den Epoxid-Harzen in der Harzkomponente (B) werksseitig zuverlässig und sicher eingestellt werden kann, und zwar unabhängig von den auf der Baustelle vorgefundenen Bedingungen. In einer Ausführungsform beträgt das Gewichtsverhältnis des Gesamtgewichts der Härterkomponente (A) zu dem Gesamtgewicht der Harzkomponente (B) 100:5 bis 100: 15, beispielsweise etwa 100:8. In Ausführungsformen der Erfindung, die bereits werksseitig Körnungsmaterial enthalten, kann zudem eine relativ kurze offene Zeit bzw. Topfzeit von ca. 20-30 Minuten eingestellt werden, da ein nachträgliches Absanden der Beschichtung ist nicht mehr notwendig ist.

Die vorliegende Erfindung betrifft auch die Verwendung der vorstehend beschriebenen Zweikomponenten-Beschichtungszusammensetzung als Bodenbeschichtung. Die Erfindung kann in allen Bodenbeschichtungen (z.B. Industrieböden oder in Parkhäusern) eingesetzt werden, etwa als Grundierung und/oder als Verschleißschicht, beispielsweise für den Schutz von mineralischem Untergrund (z.B. Beton) im Bereich von Parkdecks, Garagen und anderen Flächen. In einer Ausführungsform wird die Zweikomponenten-Beschichtungszusammensetzung sowohl als Grundierung als auch gleichzeitig als Verschleißschicht (einschichtige Beschichtung), beispielsweise als OS8-Beschichtung, verwendet.

Die erfindungsgemäße Beschichtungszusammensetzung wird unmittelbar nach dem Vermischen der Härterkomponente (A) und der Harzkomponente (B) auf einen Untergrund (z.B. einen mineralischen Untergrund) aufgebracht (z.B. durch Handapplikation) und dann aushärten gelassen. Gegebenenfalls kann die Beschichtung nach dem Applizieren mit einer Florwalze nachgewalzt werden, damit eine homogenere Oberfläche entsteht. Die Beschichtung zeigt eine sehr gute Haftung auf mineralischen Untergründen und auf Polyurethan/Epoxid Beschichtungen, sehr gute Abriebbeständigkeit, sehr gute Verschleißfestigkeit und bessere UV-Beständigkeit als herkömmliche Epoxid-Beschichtungen.

### Ausführungsbeispiel und Vergleichsbeispiel

Es wurde eine Zweikomponenten-Beschichtungszusammensetzung mit den Bestandteilen und Gewichtsanteilen gemäß folgender Tabelle 1 hergestellt:

**Tabelle 1:**

| **Rohstoffe** | **Gew.[%]** |
|---|---|
| **Komponente A:** | |
| Epoxid-Polyamin-Addukt | 6,0 |
| Polydimethylsiloxan | 0,02 |
| Polysiloxan | 0,02 |
| hydrophobierte Kieselsäure | 0,03 |
| Schwerspat (BaSO₄) | 4,1 |
| Pigmentmischung | 5,0 |
| Quarzmehl | 3,2 |
| Wasser | 18,35 |
| Polymeres Rheologieadditiv | 0,03 |
| Hydroxyethylcellulose | 1,25 |
| Quarzsand (0,2-2,2 mm) | 41 |
| Granitsplit (1,0-2,0 mm) | 21 |

| **Komponente B:** | |
|---|---|
| Epoxid Harz (Bisphenol A) | 70,4 |
| Epoxid Harz (Bisphenol F) | 14,8 |
| Epoxid Reaktivverdünner | 14,8 |

Es wurde ein handelsübliches Epoxid-Polyamin-Addukt mit einem Amin-Wert von 125-200 mg KOH/g (ASTM D 2073-92) eingesetzt. Das eingesetzte Epoxid-Polyamin-Addukt wurde mit einem Wassergehalt von 55 Gew.% verwendet. Die Mengenangabe in Tabelle 1 bezieht sich auf Epoxid-Polyamin-Addukt ohne Wasseranteil. Der Wasseranteil des eingesetzten Epoxid-Polyamin-Addukts wird in Tabelle 1 in der Gesamtwassermenge in Komponente A berücksichtigt.

Die im Arbeitsbeispiel verwendete Hydroxyethylcellulose wird als Mischung von 80 Teilen Wasser und 20 Teilen Hydroxyethylcellulose eingesetzt. Die Mengenangabe in der vorstehenden Tabelle 1 bezieht sich auf Hydroxyethylcellulose ohne Wasseranteil. Der Wasseranteil in der wässrigen Lösung der eingesetzten Hydroxyethylcellulose wird in Tabelle 1 in der Gesamtwassermenge in Komponente A berücksichtigt.

Das Mischungsverhältnis von Komponente A zu Komponente B beträgt ca. 100:8 auf Gewichtsbasis. Die offene Zeit bzw. Topfzeit beträgt ca. 20-30 Minuten. Die Brookfield-Viskosität, bestimmt mittels Brookfield-Rotationsviskosimeter bei 25°C, 60 Upm, Spindel 2, an einer 5%igen Lösung in Wasser, der hier verwendeten Hydroxyethylcellulose beträgt 300 mPa•s.

Als Vergleichsbeispiel wurde eine Formulierung mit den Bestandteilen und Mengenverhältnissen gemäß Tabelle 1 verwendet, wobei allerdings in Komponente A die niederviskose Hydroxyethylcellulose einfach weggelassen wurde.

Es wurden Ergebnisse gemäß folgender Tabelle 2 erzielt:

| | **Arbeitsbeispiel** | **Vergleichsbeispiel** |
|---|---|---|
| Abriebverlust [g] 1000 Umdrehung | 1,692 | 2,520 |
| Glasübergangstemperatur [°C] | 72 | 59 |
| Verschleißwiderstand gegen Rollbeanspruchung (BCA) | AR1 | AR2 |

Der Abriebwiderstand (Abriebverlust) wurde gemäß DIN EN ISO 5470-1:09-1999 mit folgenden Prüfparametern bestimmt:
∘ Prüfgerät: Taber Abraser nach ASTM D 4060
∘ Reibrolle: H 22 gemäß DIN EN 18026
∘ Auflagegewicht: 1000 g

## Patentansprüche

1. Zweikomponenten-Beschichtungszusammensetzung mit einer Harzkomponente (B), die als härtbaren Bestandteil mindestens ein Epoxid-Harz enthält, und einer Härterkomponente (A), die ein Aminhärter-System als Härtungsmittel für das Epoxid-Harz der Harzkomponente (B) enthält, wobei
die Härterkomponente (A) weiterhin Wasser und mindestens ein Cellulose-Derivat enthält, und wobei
das Cellulose-Derivat eine Brookfield-Viskosität, bestimmt mittels Brookfield-Rotationsviskosimeter bei 25°C, 60 Upm, Spindel 2, an einer 5%igen Lösung in Wasser, von 2000 mPa·s oder weniger aufweist, und
das Gewichtsverhältnis von Wasser zu dem Cellulose-Derivat in der Härterkomponente (A) 10:1 bis 20:1 beträgt.

2. Zweikomponenten-Beschichtungszusammensetzung gemäß Anspruch 1, wobei das Cellulose-Derivat ausgewählt ist aus Hydroxyethylcellulose (HEC), Methylcellulose (MC), Methylhydroxyethylcellulose (MHEC), Ethylhydroxyethylcellulose (E-HEC), Hydroxypropylcellulose (HPC), Carboxymethylcellulose (CMC), Carboxymethylhydroxyethylcellulose (CMHEC), und wobei das Cellulose-Derivat vorzugsweise aus Hydroxyethylcellulosen (HEC) ausgewählt ist.

3. Zweikomponenten-Beschichtungszusammensetzung gemäß Anspruch 1 oder 2, wobei das Cellulose-Derivat eine Brookfield-Viskosität von 1000 mPa·s oder weniger, vorzugsweise 500 mPa·s oder weniger, stärker bevorzugt 200 mPa·s bis 500 mPa·s, aufweist.

4. Zweikomponenten-Beschichtungszusammensetzung gemäß einem der Ansprüche 1-3, wobei in der Härterkomponente (A) das Gewichtsverhältnis von Wasser zu dem Cellulose-Derivat 12:1 bis 18:1 beträgt, und vorzugsweise im Bereich von etwa 15:1 liegt.

5. Zweikomponenten-Beschichtungszusammensetzung gemäß einem der Ansprüche 1-4, wobei die Härterkomponente (A) weiterhin mindestens ein Körnungsmaterial mit einer Korngröße, bestimmt mittels Siebanalyse gemäß DIN 66165-1:2016-08, von mindestens 0,1 mm, vorzugsweise 0,1 mm bis 4 mm, stärker bevorzugt 0,2 mm bis 3,0 mm, enthält, und wobei die Korngrößenverteilung des Körnungsmaterials vorzugsweise mindestens bimodal ist.

6. Zweikomponenten-Beschichtungszusammensetzung gemäß Anspruch 5, wobei das Körnungsmaterial ausgewählt ist aus Gesteinskörnungen auf silikatischer Basis, vorzugsweise Quarz, Cristobalit, Glimmer, Feldspat, Gneis, oder Granit, oder künstlichen, gekörnten Zuschlägen, vorzugsweise Kunststeingranulat oder Glas, sowie Gemischen dieser Materialien, wobei vorzugsweise das Körnungsmaterial aus Quarz oder Granit, stärker bevorzugt Quarz und Granit, ausgewählt ist, und wobei das Körnungsmaterial besonders bevorzugt ein Gemisch aus Quarz mit einer Korngröße von 0,2 mm bis 2,2 mm und Granit mit einer Korngröße von 1,0 mm bis 2,0 mm ist.

7. Zweikomponenten-Beschichtungszusammensetzung gemäß einem der Ansprüche 1-6, wobei die Härterkomponente (A) weiterhin mindestens einen Füllstoff enthält, und wobei der mindestens eine Füllstoff vorzugsweise einen Medianwert der Partikelgröße D₅₀, bestimmt gemäß DIN ISO 9276-1:2004-09 und ISO 9276-2:2014-05, von 1 µm bis 100 µm, stärker bevorzugt 1 µm bis 50 µm, noch stärker bevorzugt 1 µm bis 30 µm aufweist.

8. Zweikomponenten-Beschichtungszusammensetzung gemäß Anspruch 7, wobei der mindestens eine Füllstoff ausgewählt ist aus silikatischen und/oder sulfatischen Füllstoffen sowie Gemischen davon, vorzugsweise Quarz, Cristobalit, Schichtsilikate, Talkum, Kaolin, Glimmer und Erdalkalisulfate, insbesondere Bariumsulfat.

9. Zweikomponenten-Beschichtungszusammensetzung gemäß Anspruch 7 oder 8, wobei der Füllstoff mindesten einen Füllstoff enthält, der eine Rohdichte von mindestens 3,5 g/cm³, vorzugsweise mindestens 4,0 g/cm³, stärker bevorzugt mindestens 4,2 g/cm³, aufweist, und/oder
der mindestens eine Füllstoff eine Ölzahl, bestimmt gemäß DIN EN ISO 787-5, von 20 oder weniger, vorzugsweise 15 oder weniger, stärker bevorzugt 10 oder weniger, aufweist.

10. Zweikomponenten-Beschichtungszusammensetzung gemäß einem der Ansprüche 7 bis 9, wobei der Füllstoff ein Gemisch ist aus
(i) mindestens einem weichen Füllstoff (FW) mit einer Mohs-Härte von 5 oder weniger, vorzugsweise 4 oder weiniger, stärker bevorzugt 3 oder weniger, und
(ii) mindestens einem harten Füllstoff (FH) mit einer Mohs-Härte von mehr als 5, vorzugsweise 6 oder mehr, stärker bevorzugt 6,5 oder mehr.

11. Zweikomponenten-Beschichtungszusammensetzung gemäß einem der Ansprüche 1-10, wobei die Härterkomponente (A) weiterhin mindestens ein Pigment, mindestens ein Rheologieadditiv und/oder mindestens ein weiteres Additiv enthält.

12. Zweikomponenten-Beschichtungszusammensetzung gemäß einem der Ansprüche 1-11, wobei das mindestens eine Epoxid-Harz in der Harzkomponente (B) ausgewählt ist aus einem Diglycidylether von Bisphenol A, einem ein Diglycidylether von Bisphenol F und Gemischen davon, und wobei das Epoxid-Harz in der Harzkomponente (B) vorzugsweise ein Gemisch aus einem Diglycidylether von Bisphenol A und einem ein Diglycidylether von Bisphenol F ist.

13. Zweikomponenten-Beschichtungszusammensetzung gemäß einem der Ansprüche 1-12, wobei die Harzkomponente (B) weiterhin einen Reaktivverdünner enthält.

14. Zweikomponenten-Beschichtungszusammensetzung gemäß einem der Ansprüche 1-13, wobei
die Härterkomponente (A), jeweils bezogen auf das Gesamtgewicht der Härterkomponente (A), umfasst:
2,5-18 Gew.%, vorzugsweise 2,5-13,5 Gew.%, stärker bevorzugt 4,5-11,5 Gew.%, noch stärker bevorzugt 4,5-9 Gew.% an Aminhärter-System,
0,4 bis 4,0 Gew.%, vorzugsweise 0,5 bis 3,0 Gew.%, stärker bevorzugt 0,5 bis 2,0 Gew.% an Cellulose-Derivat,
10-30 Gew.%, vorzugsweise 12-25 Gew.%, stärker bevorzugt 15-22 Gew.% an Wasser,
45-80 Gew.%, vorzugsweise 50-75 Gew.%, stärker bevorzugt 55-70 Gew.% an Körnungsmaterial,
2-15 Gew.%, vorzugsweise 3-12 Gew.%, stärker bevorzugt 4-10 Gew.% an Füllstoff,
gegebenenfalls 0-12 Gew.%, vorzugsweise 1-10 Gew.%, stärker bevorzugt 2-8 Gew.% an Pigment,
gegebenenfalls 0-0,1 Gew.%, vorzugsweise 0,01-0,06 Gew.%, stärker bevorzugt 0,01-0,04 Gew.% an Rheologieadditiv, und/oder
gegebenenfalls 0-2,0 Gew.%, vorzugsweise 0,1-2,0 Gew.%, stärker bevorzugt 0,1-1,5 Gew.%, noch stärker bevorzugt 0,1-1,0 Gew.% an weiteren Additiven, und/oder
die Harzkomponente (B), jeweils bezogen auf das Gesamtgewicht der Harzkomponente (B), umfasst:
50-90 Gew.%, vorzugsweise 55 bis 80 Gew.%, stärker bevorzugt 60 bis 75 Gew.% an Diglycidylether von Bisphenol A,
5-25 Gew.%, vorzugsweise 10 bis 25 Gew.%, stärker bevorzugt 10 bis 20 Gew.% an Diglycidylether von Bisphenol F, und/oder
5-25 Gew.%, vorzugsweise 10 bis 25 Gew.%, stärker bevorzugt 10 bis 20 Gew.% an Reaktivverdünner.

15. Verwendung der Zweikomponenten-Beschichtungszusammensetzung nach einem der Ansprüche 1-14 als Bodenbeschichtung.

## Claims

1. A two-component coating composition with a resin component (B), which contains at least one epoxy resin as a hardenable component, and a hardener component (A), which contains an amine hardener system as the hardening agent for the epoxy resin of the resin component (B), wherein
the hardener component (A) furthermore contains water and at least one cellulose derivative, and wherein
the cellulose derivative has a Brookfield viscosity, determined by means of a Brookfield rotation viscometer at 25 °C, 60 rpm, spindle 2, on a 5 % solution in water, of 2000 mPa·s or less, and
the ratio by weight of water to the cellulose derivative in the hardener component (A) is 10:1 to 20:1.

2. The two-component coating composition as claimed in claim 1, wherein the cellulose derivative is selected from hydroxyethylcellulose (HEC), methylcellulose (MC), methylhydroxyethylcellulose (MHEC), ethylhydroxyethylcellulose (E-HEC), hydroxypropylcellulose (HPC), carboxymethylcellulose (CMC), carboxymethylhydroxyethylcellulose (CMHEC), and wherein the cellulose derivative is preferably selected from hydroxyethylcelluloses (HEC).

3. The two-component coating composition as claimed in claim 1 or claim 2, wherein the cellulose derivative has a Brookfield viscosity of 1000 mPa·s or less, preferably 500 mPa·s or less, more preferably 200 mPa·s to 500 mPa·s.

4. The two-component coating composition as claimed in one of claims 1-3 wherein, in the hardener component (A), the ratio by weight of water to the cellulose derivative is 12:1 to 18:1, and preferably in the region of approximately 15:1.

5. The two-component coating composition as claimed in one of claims 1-4, wherein the hardener component (A) furthermore contains at least one granular material with a grain size, determined by means of sieving analysis in accordance with DIN 66165-1:2016-08, of at least 0.1 mm, preferably 0.1 mm to 4 mm, more preferably 0.2 mm to 3.0 mm, and wherein the grain size distribution of the granular material is preferably at least bimodal.

6. The two-component coating composition as claimed in claim 5, wherein the granular material is selected from silicate-based rock aggregates, preferably quartz, cristobalite, mica, feldspar, gneiss, or granite, or granulated artificial aggregates, preferably granular artificial stone or glass, as well as mixtures of these materials, wherein preferably, the granular material is selected from quartz or granite, more preferably quartz and granite, and wherein particularly preferably, the granular material is a mixture of quartz with a grain size of 0.2 mm to 2.2 mm and granite with a grain size of 1.0 mm to 2.0 mm.

7. The two-component coating composition as claimed in one of claims 1-6, wherein furthermore, the hardener component (A) contains at least one filler, and wherein the at least one filler preferably has a median particle size value D₅₀, determined in accordance with DIN ISO 9276-1:2004-09 and ISO 9276-2:2014-05, of 1 µm to 100 µm, more preferably 1 µm to 50 µm, yet more preferably 1 µm to 30 µm.

8. The two-component coating composition as claimed in claim 7, wherein the at least one filler is selected from silicate and/or sulphate fillers as well as mixtures thereof, preferably quartz, cristobalite, sheet silicates, talc, kaolin, mica and alkaline earth sulphates, in particular barium sulphate.

9. The two-component coating composition as claimed in claim 7 or claim 8, wherein the filler contains at least one filler which has a bulk density of at least 3.5 g/cm³, preferably at least 4.0 g/cm³, more preferably at least 4.2 g/cm³, and/or
the at least one filler has an oil absorption value, determined in accordance with DIN EN ISO 787-5, of 20 or less, preferably 15 or less, more preferably 10 or less.

10. The two-component coating composition as claimed in one of claims 7 to 9, wherein the filler is a mixture of
(i) at least one soft filler (FW) with a Mohs hardness of 5 or less, preferably 4 or less, more preferably 3 or less, and
(ii) at least one hard filler (FH) with a Mohs hardness of more than 5, preferably 6 or more, more preferably 6.5 or more.

11. The two-component coating composition as claimed in one of claims 1-10, wherein the hardener component (A) furthermore contains at least one pigment, at least one rheological additive and/or at least one further additive.

12. The two-component coating composition as claimed in one of claims 1-11, wherein the at least one epoxy resin in the resin component (B) is selected from a diglycidyl ether of bisphenol A, a diglycidyl ether of bisphenol F and mixtures thereof, and wherein the epoxy resin in the resin component (B) is preferably a mixture of a diglycidyl ether of bisphenol A and a diglycidyl ether of bisphenol F.

13. The two-component coating composition as claimed in one of claims 1-12, wherein the resin component (B) furthermore contains a reactive diluent.

14. The two-component coating composition as claimed in one of claims 1-13, wherein
the hardener component (A) comprises, respectively with respect to the total weight of the hardener component (A):
2.5-18 % by weight, preferably 2.5-13.5 % by weight, more preferably 4.5-11.5 % by weight, yet more preferably 4.5-9 % by weight, of an amine hardener system,
0.4 to 4.0 % by weight, preferably 0.5 to 3.0 % by weight, more preferably 0.5 to 2.0 % by weight, of cellulose derivative,
10-30 % by weight, preferably 12-25 % by weight, more preferably 15-22 % by weight, of water,
45-80 % by weight, preferably 50-75 % by weight, more preferably 55-70 % by weight, of granular material,
2-15 % by weight, preferably 3-12 % by weight, more preferably 4-10 % by weight, of filler,
if appropriate, 0-12 % by weight, preferably 1-10 % by weight, more preferably 2-8 % by weight, of pigment,
if appropriate, 0-0.1 % by weight, preferably 0.01-0.06 % by weight, more preferably 0.01-0.04 % by weight, of rheological additive, and/or
if appropriate, 0-2.0 % by weight, preferably 0.1-2.0 % by weight, more preferably 0.1-1.5 % by weight, yet more preferably 0.1-1.0 % by weight, of further additives, and/or
the resin component (B) comprises, respectively with respect to the total weight of the resin component (B) :
50-90 % by weight, preferably 55 to 80 % by weight, more preferably 60 to 75 % by weight, of diglycidyl ether of bisphenol A,
5-25 % by weight, preferably 10 to 25 % by weight, more preferably 10 to 20 % by weight, of diglycidyl ether of bisphenol F, and/or
5-25 % by weight, preferably 10 to 25 % by weight, more preferably 10 to 20 % by weight, of reactive diluent.

15. Use of the two-component coating composition as claimed in one of claims 1-14, as a floor coating.

## Revendications

1. Composition de revêtement à deux composants, comprenant un composant résineux (B), qui en tant qu'élément durcissable contient au moins une résine époxy, et un composant durcisseur (A), qui contient un système durcisseur aminé en tant qu'agent durcisseur pour la résine époxy du composant résineux (B),
le composant durcisseur (A) contenant par ailleurs de l'eau et au moins un dérivé cellulosique et
le dérivé cellulosique faisant preuve d'une viscosité selon Brookfield, déterminée au moyen d'un viscosimètre rotatif Brookfield à 25°C, 60 Upm, broche 2, sur une solution à 5 % dans de l'eau, de 2000 mPa·s ou moins et
le rapport en poids de l'eau au dérivé cellulosique dans le composant durcisseur (A) étant de 10 : 1 à 20 : 1.

2. Composition de revêtement à deux composants selon la revendication 1, le dérivé cellulosique étant sélectionné parmi l'hydroxyéthylcellulose (HEC), la méthylcellulose (MC), la méthylhydroxyéthylcellulose (MHEC), l'éthylhydroxyéthylcellulose (E-HEC), l'hydroxypropylcellulose (HPC), la carboxyméthylcellulose (CMC), la carboxyméthylhydroxyéthylcellulose (CMHEC) et le dérivé cellulosique étant sélectionné de préférence parmi les hydroxyéthylcelluloses (HEC).

3. Composition de revêtement à deux composants selon la revendication 1 ou 2, le dérivé cellulosique faisant preuve d'une viscosité selon Brookfield de 1000 mPa·s ou moins, de préférence de 500 mPa·s ou moins, de manière plus préférentielle, de 200 mPa·s à 500 mPa·s.

4. Composition de revêtement à deux composants selon l'une quelconque des revendications 1 à 3, dans le composant durcisseur (A), le rapport en poids de l'eau au dérivé cellulosique étant de 12 : 1 à 18:1 et se situant de préférence dans l'ordre d'environ 15 : 1.

5. Composition de revêtement à deux composants selon l'une quelconque des revendications 1 à 4, le composant durcisseur (A) contenant par ailleurs au moins une matière granuleuse d'une granulométrie, déterminée au moyen d'une analyse granulométrique selon la norme DIN 66165-1 : 2016-08, d'au moins 0,1 mm, de préférence de 0,1 mm à 4 mm, de manière plus préférentielle, de 0,2 mm à 3,0 mm et
la distribution granulométrique de la matière granuleuse étant de préférence bimodale.

6. Composition de revêtement à deux composants selon la revendication 5, la matière granuleuse étant sélectionnée parmi les granulats sur base de silicate, de préférence le quartz, la cristobalite, le mica, le feldspath, le gneiss, ou le granit, ou des additifs granuleux synthétiques, de préférence des granulés de pierre artificielle ou du verre, ou des mélanges desdites matières, de préférence la matière granuleuse étant sélectionnée parmi le quartz ou le granit, de manière plus préférentielle, le quartz et le granit, et la matière granuleuse étant de manière particulièrement préférentielle un mélange de quartz d'une granulométrie de 0,2 mm à 2,2 mm et de granit d'une granulométrie de 1,0 mm à 2,0 mm.

7. Composition de revêtement à deux composants selon l'une quelconque des revendications 1 à 6, le composant durcisseur (A) contenant par ailleurs au moins un agent de charge et l'au moins un agent de charge présentant de préférence une valeur médiane de la taille des particules D₅₀, déterminée selon les normes DIN ISO 9276-1 : 2004-09 et ISO 9276-2 : 2014-05, de 1 µm à 100 µm, de manière plus préférentielle, de 1 µm à 50 µm, de manière encore plus préférentielle, de 1 µm à 30 µm.

8. Composition de revêtement à deux composants selon la revendication 7, l'au moins un agent de charge étant sélectionné par les agents de charge silicatés et / ou sulfatés, ainsi que leurs mélanges, de préférence le quartz, la cristobalite, les phyllosilicates, le talc, le kaolin, le mica et les sulfates alcalino-terreux, notamment le sulfate de baryum.

9. Composition de revêtement à deux composants selon la revendication 7 ou 8, l'agent de charge contenant au moins un agent de charge qui fait preuve d'une densité apparente d'au moins 3,5 g/cm³, de préférence d'au moins 4,0 g/cm³, de manière plus préférentielle, d'au moins 4,2 g/cm³, et / ou
l'au moins agent de charge faisant preuve d'une prise d'huilé, déterminée selon la norme DIN EN ISO 787-5, de 20 ou moins, de préférence de 15 ou moins, de manière plus préférentielle, de 10 ou moins.

10. Composition de revêtement à deux composants selon l'une quelconque des revendications 7 à 9, l'agent de charge étant un mélange
(i) d'au moins un agent de charge (FW) mou d'une dureté Mohs de 5 ou moins, de préférence de 4 ou moins, de manière plus préférentielle, de 3 ou moins et
(ii) d'au moins un agent de charge (FH) dur d'une dureté Mohs supérieure à 5, de préférence de 6 ou plus, de manière plus préférentielle de 6,5 ou plus.

11. Composition de revêtement à deux composants selon l'une quelconque des revendications 1 à 10, le composant durcisseur (A) contenant par ailleurs au moins un pigment, au moins un additif rhéologique et / ou au moins un autre additif.

12. Composition de revêtement à deux composants selon l'une quelconque des revendications 1 à 11, l'au moins une résine époxy dans le composant résineux (B) étant sélectionnée parmi un éther diglycidylique de bisphénol A, un éther diglycidylique de bisphénol F et leurs mélanges et la résine époxy dans le composant résineux (B) étant de préférence un mélange d'un éther diglycidylique de bisphénol A et d'un éther diglycidylique de bisphénol F.

13. Composition de revêtement à deux composants selon l'une quelconque des revendications 1 à 12, le composant résineux (B) contenant par ailleurs un diluant réactif.

14. Composition de revêtement à deux composants selon l'une quelconque des revendications 1 à 13,
le composant durcisseur (A), comprenant, chaque fois en rapport au poids total du composant durcisseur (A) :
de 2,5 à 18 % en poids, de préférence de 2,5 à 13,5 % en poids, de manière plus préférentielle, de 4,5 à 11,5 % en poids, de manière encore plus préférentielle, de 4,5 à 9 % en poids d'un système durcisseur aminé,
de 0,4 à 4,0 % en poids, de préférence de 0,5 à 3,0 % en poids, de manière plus préférentielle, de 0,5 à 2,0 % en poids d'un dérivé cellulosique,
de 10 à 30 % en poids, de préférence de 12 à 25 % en poids, de manière plus préférentielle, de 15 à 22 % en poids d'eau,
de 45 à 80 % en poids, de préférence de 50 à 75 % en poids, de manière plus préférentielle, de 55 à 70 % en poids d'une matière granuleuse,
de 2 à 15 % en poids, de préférence de 3 à 12 % en poids, de manière plus préférentielle, de 4 à 10 % en poids d'un agent de charge,
le cas échéant, de 0 à 12 % en poids, de préférence de 1 à 10 % en poids, de manière plus préférentielle, de 2 à 8 % en poids d'un pigment,
le cas échéant, de 0 à 0,1 % en poids, de préférence de 0,01 à 0,06 % en poids, de manière plus préférentielle, de 0,01 à 0,04 % en poids d'un additif rhéologique, et / ou
le cas échéant, de 0 à 2,0 % en poids, de préférence de 0,1 à 2,0 % en poids, de manière plus préférentielle, de 0,1 à 1,5 % en poids, de manière encore plus préférentielle, de 0,1 à 1,0 % en poids d'autres additifs et / ou
le composant résineux (B),comprenant, chaque fois en rapport au poids total du composant résineux (B) :
de 50 à 90 % en poids, de préférence de 55 à 80 % en poids, de manière plus préférentielle, de 60 à 75 % en poids d'éther diglycidylique de bisphénol A,
de 5 à 25 % en poids, de préférence de 10 à 25 % en poids, de manière plus préférentielle, de 10 à 20 % en poids d'éther diglycidylique de bisphénol F, et / ou
de 5 à 25 % en poids, de préférence de 10 à 25 % en poids, de manière plus préférentielle, de 10 à 20 % en poids de diluant réactif.

15. Utilisation de la composition de revêtement à deux composants selon l'une quelconque des revendications 1 à 14 en tant que revêtement de sol.
